# FASCICULE DE BREVET EUROPEEN

(11) **EP 1 072 824 B1**
(45) Date de publication et mention de la délivrance du brevet: **12.11.2003**
(21) Numéro de dépôt: 00402152.3
(22) Date de dépôt: 27.07.2000
(51) Int. Cl.: F16H 63/20

(54) **Boîte de vitesses compacte comportant des pieds basculants d'actionnement des fourchettes**
Getriebe kompakter Bauart mit Schwenkfüssen zur Betätigung von Schaltgabeln
Compact gearbox comprising swiveling feet for actuating shift fork

(30) Priorité: 28.07.1999 FR 9909779; 28.07.1999 FR 9909780
(43) Date de publication de la demande: 31.01.2001
(73) Titulaire: Renault s.a.s., 92100 Boulogne Billancourt (FR)
(72) Inventeur: Bremaud, Jean, 78150 Montigny le Bretonneux (FR); Boyer, Bernard, 27520 Thuit Hebert (FR); Clerin, Georges, 92500 Rueil Malmaison (FR)

(56) Documents cités:
- DE-A- 4 424 543
- DE-A- 19 705 557
- DE-A- 19 730 778
- DE-U- 29 814 943
- FR-A- 2 609 138
- US-A- 4 458 551

## Description

L'invention concerne une boîte de vitesses pour véhicule automobile.

L'invention concerne plus particulièrement une boîte de vitesses de véhicule automobile, du type qui comporte un arbre primaire et deux arbres secondaires parallèles, du type qui comporte au mois trois engrenages dans chacun desquels un pignon fixe de l'arbre primaire engrène avec un pignon fou porté par chacun des arbres secondaires, du type qui comporte des moyens de crabotage de chaque pignon fou sur l'arbre secondaire associé qui comportent des crabots associés à chaque pignon fou qui sont mobiles axialement sous l'action de moyens de commande comportant une fourchette de commande de chaque crabot qui est montée coulissante parallèlement à l'arbre secondaire associé et qui est munie d'un pied transversal d'actionnement lié à la fourchette de commande et mû par un actionneur, commun aux moyens de crabotage des deux arbres, dont une tige, commandée en translation axiale en coulissement est susceptible de déplacer sélectivement le pied d'actionnement de chaque fourchette pour engager un rapport de démultiplication correspondant.

On connaît de nombreuses boîtes de vitesses à un arbre primaire et à deux arbres parallèles secondaires comportant des moyens de commande pour le crabotage de pignons fous sur les arbres secondaires qui les portent, de manière à provoquer leur engrènement avec des pignons fixes associés appartenant à l'arbre primaire et engager ainsi sélectivement des rapports de démultiplication déterminés associés aux dits pignons fous.

Les boîtes de vitesses automobiles font conventionnellement appel à des dispositifs de crabotage à synchroniseurs du type de ceux précédemment évoqués, lesdits synchroniseurs étant susceptibles d'être déplacés axialement par des fourchettes, portées par des axes qui sont susceptibles d'être actionnées axialement par le conducteur du véhicule à l'aide d'un levier de changement de vitesses dispositif à l'intérieur de l'habitacle du véhicule. Dans le cas d'une boîte de vitesses dite "manuelle", le levier de changement de vitesses actionne des moyens mécaniques qui agissent directement sur les fourchettes, et dans le cas d'une boîte de vitesses automatisée dite "robotisée" ou à commande automatisée, le levier de changement de vitesses commande indirectement le déplacement des fourchettes, notamment par l'intermédiaire de vérins ou de tout autre type d'actionneurs.

Le document FR-A-2.609.138 décrit un tel dispositif.

Ce document décrit plus particulièrement une architecture de boîte de vitesses robotisée dans laquelle le crabotage des pignons fous sur leur arbre et le déplacement des synchroniseurs parallèlement à cet arbre est réalisé par des fourchettes déplacées par actionneurs, en l'occurrence des vérins. Chaque fourchette est déplacée par un actionneur associé.

Cette disposition est particulièrement encombrante car elle nécessite un nombre important de fourchettes, d'axes de fourchettes et d'actionneurs.

Cette disposition est donc particulièrement inadaptée à une boîte de vitesses à un arbre primaire et à deux arbres secondaires dans laquelle le dispositif de crabotage doit, du fait de l'encombrement des arbres secondaires, présenter un encombrement transversal minimal.

Pour réduire l'encombrement des dispositifs de crabotage et réduire les coûts de fabrication, on a proposé de n'utiliser qu'un seul actionneur permettant de commander consécutivement. les déplacements de plusieurs fourchettes. Un tel dispositif, comprenant toutes les caractéristiques du préambule de la revendication 1, est décrit dans le document US-A-4.458.551.

Dans ce dispositif, une boîte de vitesses à un arbre primaire et à deux arbres secondaires parallèles comporte un actionneur unique qui est muni d'une tige à l'extrémité de laquelle un doigt est susceptible d'être déplacé en rotation et en translation pour respectivement sélectionner une fourchette et engager un rapport associé à la fourchette considérée en la déplaçant parallèlement à l'arbre de la boîte.

Ce dispositif présente un avantage certain par rapport au précédent dans la mesure où le nombre d'actionneurs est considérablement réduit. Toutefois, le doigt et la tige qui le porte doivent nécessairement être mobiles en rotation suivant un largeur secteur angulaire pour pouvoir sélectionner toutes les fourchettes correspondant à des positions angulaires prédéfinies de sélection.

Or, la course de rotation importante de l'actionneur pénalise grandement, du fait des jeux internes de fonctionnement de l'actionneur, le positionnement de la tige suivant les positions angulaires prédéfinies de sélection. De plus, le temps de passage d'une position angulaire prédéfinie de sélection extrême à l'autre est élevé du fait de l'angle que la tige doit parcourir au cours de sa rotation.

Ces considérations rendent notamment la boîte de vitesses impropre à un usage sportif.

Pour remédier à ces inconvénients, l'invention propose une boîte de vitesses dans laquelle le bras de l'actionneur n'est soumis qu'à de faibles débattements angulaires.

Dans ce but, l'invention propose une boîte de vitesses du type mentionné précédemment, caractérisée en ce que la tige de l'actionneur est montée tournante par rapport à son axe et porte deux doigts radiaux transversalement coplanaires qui sont susceptibles, lorsque la tige est commandée en rotation, d'être reçus dans des fourches de contact dont chacune est portée par l'extrémité libre d'un pied transversal de fourchette, pour sélectionner au moins deux rapports de démultiplication associés chacun à un arbre secondaire déterminé en amenant chacun des doigts radiaux dans une fourche de contact déterminée correspondante, puis permettre d'engager un rapport sélectionné par commande en translation axiale de la tige.

Par ailleurs, dans le cadre du développement de boîtes de vitesses à un arbre primaire et deux arbres secondaires du type décrit précédemment, qui présentent l'avantage de présenter un encombrement axial réduit, on a recherché une disposition des actionneurs qui soit la plus compacte possible dans les directions transversales perpendiculaires à la direction axiale des arbres primaire et secondaire.

Dans le document US-A-4.458.551, l'arbre primaire et les deux arbres secondaires comportent chacun un seul crabot double qui est susceptible d'être actionné dans les deux sens par une fourchette coulissante associée. Les crabots de la boîte sont, dans chacun des plans contenant deux arbres de la boîte, sensiblement disposés en quinconce de façon que les crabots et les fourchettes de la boîte ne présentent qu'un encombrement transversal minimal. Ce dispositif présente un avantage certain par rapport au précédent dans la mesure où le nombre d'actionneurs est réduit.

Cette conception présente toutefois l'inconvénient de ne permettre de disposer que d'un nombre limité de crabots doubles sur chaque arbre. De ce fait, dans l'exemple cité, la boîte de vitesses est une boîte à cinq rapports de marche avant et un rapport de marche arrière.

Lorsque l'on désire disposer d'une boîte de vitesses à au moins six rapports de marche avant et un rapport de marche arrière, il est nécessaire de disposer au moins un crabot supplémentaire sur un des arbres, notamment sur un des arbres secondaires. L'ajout d'un crabot pose nécessairement le problème de la commande de la fourchette de ce crabot.

Du fait du rallongement, par rapport à la conception précédente, de l'arbre secondaire qui porte le crabot supplémentaire, le doigt de l'actionneur et la tige qui le porte doivent nécessairement être mobiles axialement en translation suivant une course longueur, pour pouvoir sélectionner toutes les fourchettes correspondant à des positions axiales prédéfinies de sélection.

Or, la course de translation axiale importante de l'actionneur pénalise grandement, du fait des jeux internes de fonctionnement de l'actionneur et de la flexion de la tige, le positionnement du doigt par rapport aux pieds de fourchettes. De plus, le temps de passage d'une fourchette à une autre agencée sur le même arbre secondaire est élevé du fait de la grande distance axiale que le doigt doit parcourir.

Pour remédier à ces inconvénients, l'invention propose aussi une boîte de vitesses dans laquelle le bras de l'actionneur n'est soumis qu'à de faibles débattements axiaux pour commander un crabot double et au moins un crabot simple disposés sur un même arbre secondaire.

Selon d'autres caractéristiques de l'invention :
- la boîte comporte, sur un premier arbre secondaire, un crabot simple qui est agencé à proximité d'un pignon fou et qui est susceptible d'occuper sélectivement une position neutre ou une position de crabotage du dit pignon fou correspondant à l'engagement d'un rapport de démultiplication, et en ce que les autres crabots sont agencés entre deux pignons fous, pour occuper une position neutre ou deux positions opposées de crabotage de chacun des dits pignons fous, situées axialement de part et d'autre de la position neutre et correspondant chacune à l'engagement d'un rapport de démultiplication ;
- la tige de l'actionneur peut occuper plusieurs positions angulaires prédéfinies de sélection, qui correspondent chacune à la sélection d'une fourche par un doigt, et au moins une position axiale extrême de passage d'un des rapports de démultiplication et une position neutre ;
- les deux doigts radiaux coplanaires sont répartis angulairement dans leur plan commun de façon que, dans une position angulaire prédéfinie de sélection, un seul doigt soit reçu dans une fourche de contact déterminée, l'autre doigt n'étant reçu dans aucune fourche de contact ;
- la tige de l'actionneur porte une douille de verrouillage d'au moins un rapport non sélectionné, qu'elle entraîne seulement en rotation, par rapport à laquelle les doigts radiaux peuvent coulisser librement, et la douille comporte au moins une touche radiale, qui est interposée angulairement entre les doigts dans le plan commun des doigts et qui est destinée, dans la position angulaire prédéfinie de sélection d'une fourche par le doigt correspondant, à être reçue dans au moins une fourche associée à la dite au moins une fourchette non sélectionnée pour la verrouiller axialement ;
- le premier arbre secondaire comporte un crabot double associé à des troisième et quatrième rapports de marche avant et un crabot simple associé à un rapport de marche arrière, et
- le deuxième arbre secondaire comporte un crabot double associé à des premier et deuxième rapports de marche avant et un crabot double associé à des cinquième et sixième rapports de marche avant ;
- les fourchettes associées aux arbres secondaires sont montées par paires sur un arbre commun longitudinal de guidage ;
- la fourchette de commande des troisième et quatrième rapports de marche avant et la fourchette de commande du rapport de marche arrière sont montées coulissantes sur l'arbre de guidage commun fixe associé au premier arbre secondaire ;
- les pieds d'actionnement de la fourchette de commande des troisième et quatrième rapports de marche avant et de la fourchette de commande du rapport de marche arrière sont liés rigidement aux fourchettes associées ;
- la fourchette de commande des premier et deuxième rapports de marche avant et la fourchette de commande des cinquième et sixième rapports de marche avant sont montées respectivement fixe et coulissante sur l'arbre de guidage commun coulissant associé au deuxième arbre secondaire ;
- les pieds d'actionnement de la fourchette de commande des premier et deuxième rapports de marche avant et de la fourchette de commande des cinquième et sixième rapports de marche avant sont articulés en leur milieu, par un pivot d'axe transversal qui est porté par un carter de la boîte transversale par rapport à la direction axiale des arbres primaire et secondaire, sur un carter de la boîte ;
- la fourchette de commande des premier et deuxième rapports de marche avant est plus éloignée axialement du doigt de commande de l'actionneur que la fourchette de commande des cinquième et sixième rapports de marche avant ;
- un premier pied transversal, associé à la fourchette de commande des cinquième et sixième rapports de marche avant, et un deuxième pied transversal, associé à la fourchette de commande des premier et deuxième rapports de marche avant, présentent respectivement la forme d'une première et d'une deuxième plaques qui sont accolées l'une à l'autre dans un plan perpendiculaire à l'axe de leur pivot commun, une extrémité de commande de chaque plaque opposée à la fourche comportant une lumière découpée en forme de U inversé entre les branches de laquelle est reçu un plot cylindrique d'axe transversal d'entraînement de la fourchette associée, le plot d'entraînement de la fourchette de commande des premier et deuxième rapports de marche avant et le plot d'entraînement de la fourchette de commande des cinquième et sixième rapports de marche avant s'étendant respectivement à partir de l'arbre de guidage commun et de la fourchette de commande des cinquième et sixième rapports de marche avant, pour lier et articuler les fourchettes par rapport aux pieds ;
- la deuxième plaque est transversalement plus éloignée des fourchettes que la première plaque pour permettre la sélection des plaques par le doigt radial de l'actionneur ;
- la deuxième plaque est plus longue que la première plaque, pour permettre la sélection des plaques par le doigt radial de l'actionneur ;
- la fourche de contact de chaque plaque comporte une lumière qui est découpée en forme de U ;
- chaque plaque est susceptible d'être verrouillée par la tranche radiale de la douille de l'actionneur lorsque le doigt de l'actionneur est reçu dans la fourche de contact de l'autre plaque, et des moyens d'indexation sont interposés entre les première et deuxième plaques ;
- la boîte est à commande robotisée, et la tige de l'actionneur est solidaire d'un vérin roto-linéaire mû par des moteurs pas à pas, commandés en réponse à des mouvements d'un levier de changement de vitesses du véhicule sur lequel agit le conducteur ;
- la boîte est commandée manuellement et l'actionneur est relié par une tringlerie à un levier de changement de vitesses du véhicule sur lequel agit le conducteur.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective de l'actionneur et des pieds d'actionnement de deux fourchettes de commande de deux crabots d'un même arbre d'une boîte de vitesses selon une partie de l'invention ;
- la figure 2 est une vue en coupe, perpendiculaire à l'axe de l'actionneur et des pieds de commande des fourchettes de la boîte de vitesses selon l'invention ;
- la figure 3 est une vue de côté de l'actionneur et des pieds de commande des fourchettes de la boîte de vitesses selon une partie de l'invention ;
- la figure 4 est une vue en coupe, suivant l'axe de l'actionneur, de moyens de crabotage comportant un seul doigt de commande des fourchettes d'une boîte de vitesses selon un état antérieur de la technique ;
- la figure 5 est une vue en coupe suivant l'axe de l'actionneur de moyens de crabotage comportant deux doigts de commande des fourchettes d'une boîte de vitesses selon l'invention ;
- la figure 6 est une vue de côté des moyens de crabotage selon la figure 5 ;
- la figure 7 est une vue en perspective des moyens de crabotage de la boîte de vitesses selon une partie de l'invention, représentée du côté des pieds de fourchette des premier, second, cinquième et sixième rapports de marche avant, dans laquelle l'une des fourchettes est illustrée dans sa position de sélection d'un rapport ;
- la figure 8 est une vue de détail en perspective de la liaison du pied de la fourchette de commande des cinquième et sixième rapport de marche avant à la fourchette considérée ;
- la figure 9 est une vue en perspective des moyens de crabotage de la boîte de vitesses selon une autre partie de l'invention, représentée du côté des pieds de fourchette des troisième et quatrième rapports de marches avant et du rapport de marche arrière, dans laquelle l'une des fourchettes est illustrée dans sa position de sélection d'un rapport ;
- les figures 10 à 13 sont des vues suivant l'axe de l'actionneur représentant les moyens de crabotage en positions de sélection respectives des premier et deuxième rapports de marche avant, des cinquième et sixième rapports de marche avant, et du rapport de marche arrière.

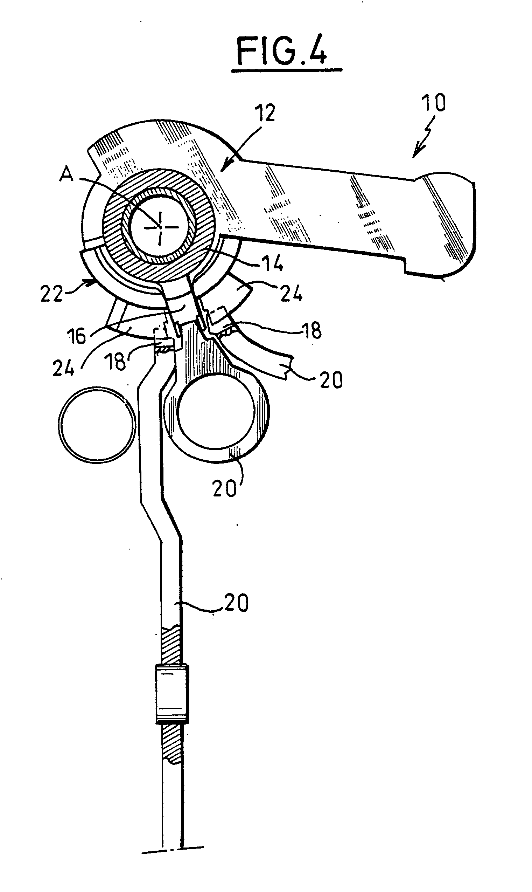

On a représenté à la figure 4 des moyens de crabotage 10 conventionnels pour l'actionnement des fourchettes de commande de crabots d'une boîte de vitesses à deux arbres secondaires d'axes respectifs B et C.

De manière connue, de tels moyens de crabotage 10 comportent un actionneur 12 d'axe A qui est mobile en rotation pour qu'un doigt 16 de l'actionneur, qui s'étend radialement à partir d'une tige axiale 14 de l'actionneur, soit reçu dans des fourches 18 de pieds 20 de fourchettes (non représentées) pour effectuer le sélection d'au moins un rapport de transmission de la boîte associé à chaque fourchette.

Lorsque le doigt 16 est positionné dans la fourche 18 du pied 20 de la fourchette sélectionnée, l'actionneur 12 peut alors être déplacé en coulissement suivant son axe A de manière à engager le rapport de transmission choisi par le conducteur du véhicule.

La tige axiale 14 de l'actionneur 12 est solidaire, en rotation seulement, d'une douille 22 de verrouillage qui comporte des touches radiales 24 coplanaires au doigt 16 dans le plan transversal perpendiculaire à l'axe A, c'est à dire dans le plan de la figure 4.

La douille 22 comporte une touche radiale 24 de moins que les moyens de crabotage 10 ne comportent de pieds 20 de fourchettes, et ces touches radiales 24 sont agencées angulairement de part et d'autre du doigt 16, de façon qu'elles soient reçues dans les fourches 18 non sélectionnées lorsque que le doigt 16 est reçu dans une fourche 18 déterminée. De la sorte, les touches radiales 24 verrouillent en translation les pieds 20 des fourchettes non sélectionnées et empêchent celles-ci de se déplacer axialement inopinément, ceci afin d'éviter que deux rapports de transmission ne soient engagés simultanément, ce qui entraînerait l'endommagement, voire la destruction de la boîte de vitesses.

Ces moyens de crabotage constituent une commande simple des fourchettes 20 de la boîte de vitesses, mais ils ont pour inconvénient de nécessiter une course angulaire importante de la tige 14 lors de la sélection, ce qui, dans le cas d'une boîte de vitesses à commande manuelle, nécessite une démultiplication importante entre la tige 14 et un levier de vitesses (non représenté) du véhicule. Ceci est particulièrement préjudiciable à une commande de boîte précise, une forte démultiplication amplifiant les jeux de fonctionnement et étant par conséquent néfaste à la précision de positionnement des vitesses sur la grille de passage du levier de vitesses.

Par ailleurs, dans le cas d'une boîte de vitesses dite robotisée dont l'actionnement de la tige 14 est assuré par au moins un vérin, une course angulaire importante de la tige 14 nécessite d'employer un vérin de taille conséquente, ce qui augmente l'encombrement total de la boîte de vitesses.

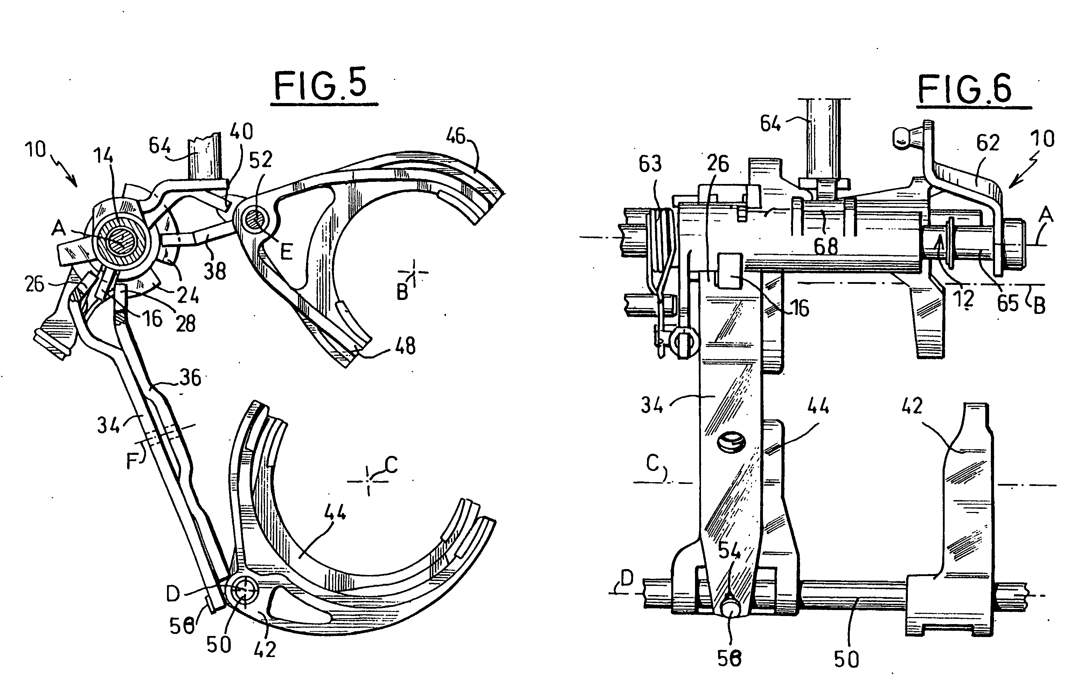

Pour remédier à cet inconvénient, comme l'illustrent les figures 5 à 13, l'invention propose donc des moyens de commande 10 comportant un actionneur 12 dont la tige 14 est munie de deux doigts de commande 16 et 17.

Dans le mode de réalisation préféré de l'invention représenté aux figures 5 à 9, les moyens de crabotage 10 comportent un actionneur 12 d'axe A qui est mobile en rotation pour que des doigts 16 et 17 coplanaires de l'actionneur 12, qui s'étendent radialement dans un même plan commun transversal à partir de la tige axiale 14 de l'actionneur 12 puissent être reçus sélectivement, lors de la rotation de l'actionneur 12 autour de son axe A, dans des fourches 26, 28, 30, et 32 de pieds respectifs 34, 36, 38, et 40 de fourchettes respectives 42, 44, 46 et 48 pour effectuer la sélection des rapports de transmission de la boîte de vitesses associés à chaque fourchette 42, 44, 46 ou 48.

Dans le mode de réalisation préféré de l'invention, la boîte de vitesses comporte un premier arbre secondaire (non représenté) d'axe B qui comporte un crabot double (non représenté) associé à des troisième et quatrième rapports de marche avant et un crabot simple (non représenté) associé à un rapport de marche arrière, et elle comporte aussi un deuxième arbre secondaire (non représenté) d'axe C qui comporte un crabot double (non représenté) associé à des premier et deuxième rapports de marche avant et un crabot double (non représenté) associé à des cinquième et sixième rapports de marche avant.

La fourchette 42, qui est coaxiale au deuxième arbre secondaire d'axe C, commande l'actionnement du crabot double associé aux premier et deuxième rapports de marche avant et la fourchette 44, qui est elle aussi coaxiale au deuxième arbre secondaire, commande l'actionnement du crabot double associé aux cinquième et sixième rapports de marche avant.

D'une façon analogue, la fourchette 46, qui est coaxiale au premier arbre secondaire d'axe B, commande l'actionnement du crabot simple associé au rapport de marche arrière, et la fourchette 48, qui est elle aussi coaxiale au premier arbre secondaire d'axe B commande l'actionnement du crabot double associé aux troisième et quatrième rapports de marche avant.

Comme l'illustrent les figures 5, 6, et 7, la fourchette 42 de commande des premier et deuxième rapports de marche avant et la fourchette 44 de commande des cinquième et sixième rapports de marche avant, qui sont associées au deuxième arbre secondaire, sont montées respectivement fixe et coulissante sur un arbre 50 de guidage commun coulissant, d'axe D parallèle à l'axe C associé au deuxième arbre secondaire.

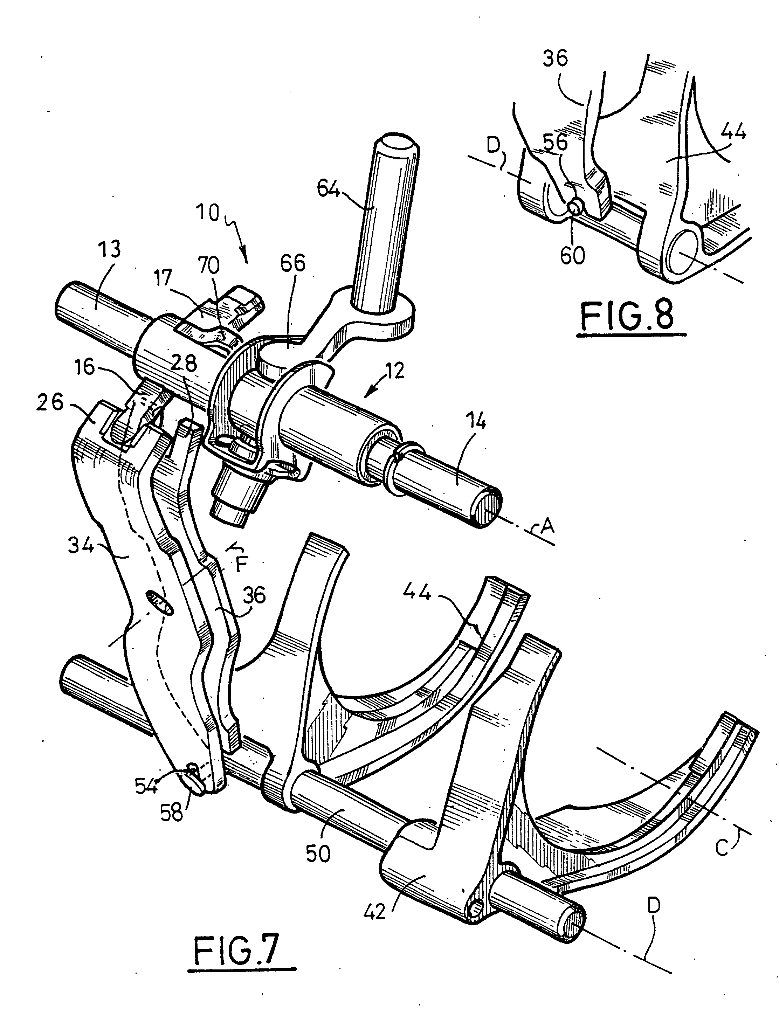

Comme l'illustrent plus particulièrement les figures 7 et 8, le pied d'actionnement 34 de la fourchette 42, et le pied d'actionnement 36 de la fourchette 44, sont articulés en leur milieu, par un pivot d'axe transversal F, sur un carter (non représenté) de la boîte, et ils comportent des lumières 54 et 56 en forme de U inversé entre les branches desquelles sont reçus des plots 58 et 60 cylindriques, d'axes transversaux G et H parallèles à l'axe F.

Les plots 58 et 60 s'étendent respectivement à partir de l'arbre de guidage 50 commun et de la fourchette 44 auxquels ils sont rigidement liés, pour articuler les fourchettes 42 et 44 par rapport à leurs pieds respectifs 34 et 36.

Ainsi, comme on le verra ultérieurement, lors de l'engagement du premier ou du deuxième rapport de marche avant par le doigt 16 coopérant avec la fourche 26 du pied 34, le pied 34 pivote autour du pivot d'axe F et repousse dans la direction opposée le plot 58 solidaire de l'axe 50 en actionnant ainsi la fourchette 42.

D'une façon analogue, lors de l'engagement du cinquième ou du sixième rapport de marche avant par le doigt 16 coopérant avec la fourche 28 du pied 36, le pied 36 pivote autour du pivot d'axe F et repousse dans la direction opposée le plot 60 solidaire de la fourchette 44.

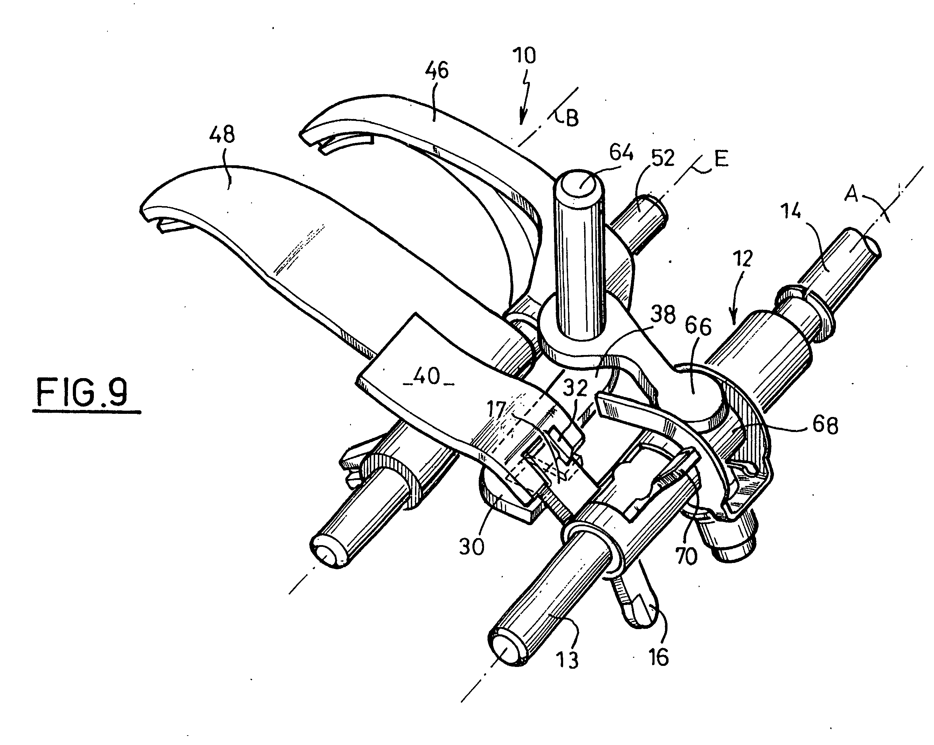

D'une façon analogue, comme l'illustrent les figures 5 et 9, la fourchette 46 de commande du rapport de marche arrière et la fourchette 48 de commande des troisième et quatrième rapports de marche avant, qui sont associées au premier arbre secondaire, sont montées coulissantes sur un arbre 52 de guidage commun fixe d'axe E parallèle à l'axe B associé au premier arbre secondaire.

Comme l'illustrent plus particulièrement les figures 5 et 9, les pieds d'actionnement 38 et 40 de la fourchette 46 et de la fourchette 48 sont liés rigidement à leurs fourchettes 46 et 48 respectives.

Ainsi, comme on le verra ultérieurement, lors de l'engagement du rapport de marche arrière par le doigt 17 coopérant avec la fourche 30 du pied 38, le pied 38 entraîne directement la fourchette 46 associée de commande du rapport de marche arrière.

D'une façon analogue, lors de l'engagement du troisième ou du quatrième rapport de marche avant par le doigt 17 coopérant avec la fourche 32 du pied 40, le pied 40 entraîne directement la fourchette 48.

Le fonctionnement des moyens de crabotage 10 est maintenant décrit en référence aux figures 6 à 13.

Comme l'illustre la figure 6, la tige 14 de l'actionneur est susceptible d'être actionnée en rotation autour de l'axe A et en translation suivant l'axe A.

A cet effet, les moyens de 10 comportent un premier levier 62 qui est lié par des moyens d'accouplement (non représentés) à une extrémité 64 de la tige 14. Ce levier 62 peut par exemple être relié à une tringlerie (non représentée) solidaire d'un levier de vitesses du véhicule ou à un vérin de la boîte de vitesses qui est alors une boîte de vitesses dite "robotisée". Le levier 62 permet l'entraînement en rotation de la tige 14 de l'actionneur et des doigts radiaux 16 et 17 autour de l'axe A.

La tige 14 de l'actionneur peut occuper plusieurs positions angulaires prédéfinies de sélection, qui correspondent chacune à la sélection d'une fourche 26, 28 par le doigt 16 ou à la sélection de la fourche 30 ou 32 par le doigt 17.

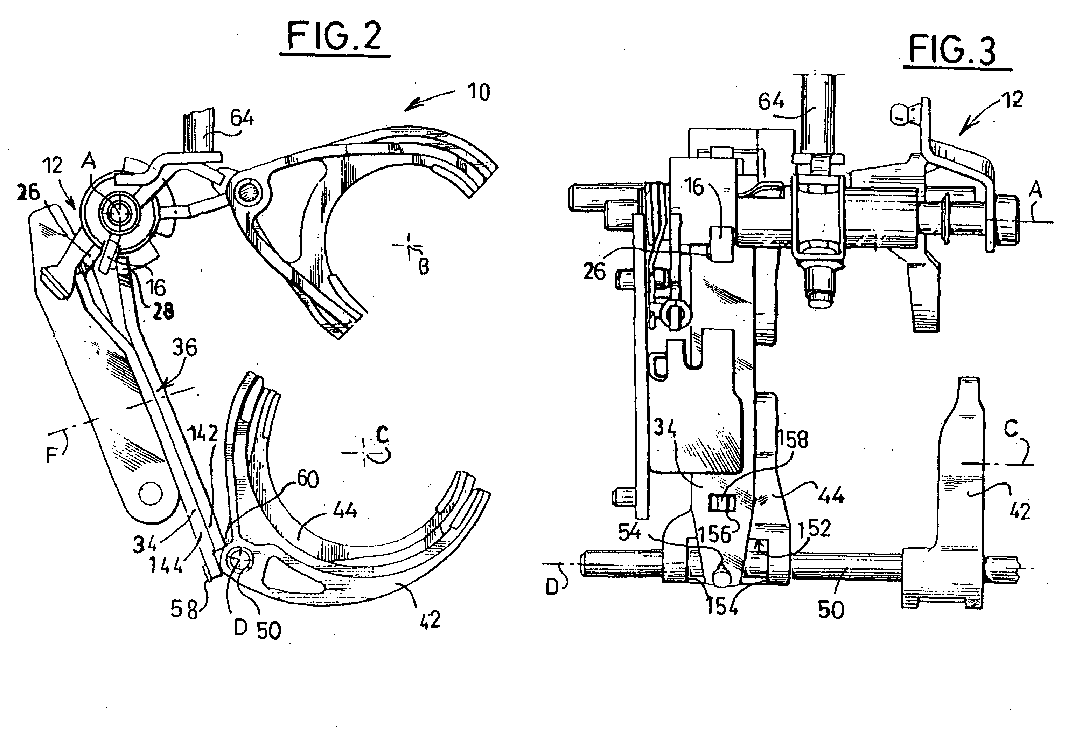

La tige 14 est rappelée élastiquement vers une position neutre de sélection (non représentée) dans laquelle des moyens de rappel élastique, notamment un ressort spiral 63 dont un brin est lié au carter de la boîte, dont un autre brin est lié à la tige 14, et qui est représenté à la figure 3, rappellent la tige 14 dans une position selon laquelle le doigt 17 est reçu dans la fourche 32, et selon laquelle aucune des fourches 26, 28, ou 30 ne reçoivent le doigt 16.

Lorsqu'un doigt 16 ou 17 est positionné dans la fourche 26, 28, 30 ou 32 du pied 34, 36, 38 ou 40 de la fourchette 42, 44, 46 ou 48 sélectionnée, l'actionneur 12 peut alors être déplacé en coulissement suivant son axe A de manière à engager le rapport de transmission choisi par le conducteur du véhicule.

A cet effet, un carter de la boîte (non représenté) reçoit en pivotement un second levier 64 qui est coudé et dont une touche d'extrémité 66 est reçue dans une encoche 68 en forme de deux portions parallèles de collerettes axiales solidaires de la tige 14. L'axe du levier 64 est sensiblement perpendiculaire et non sécant à l'axe A de la tige 14, de manière que la touche d'extrémité 66 du levier 64 joue le rôle d'un excentrique et permette de déplacer axialement la tige 14.

De la sorte, le levier 64 peut être pivoté suivant trois positions angulaires, notamment deux position extrêmes et une position intermédiaire neutre, pour amener la tige 14 et les doigts 16 et 17 à occuper une position neutre ou deux positions opposées de crabotage situées de part et d'autre de sa position neutre, correspondant au crabotage de chacun des pignons fous portés par les arbres secondaires de la boîte de vitesses, dont les positions opposées de crabotage sont situées axialement de part et d'autre de la position neutre et correspondant chacune à l'engagement d'un rapport de démultiplication.

Avantageusement, le levier 64 peut lui aussi être rappelé vers sa position neutre par des moyens de rappel élastique ( non représentés).

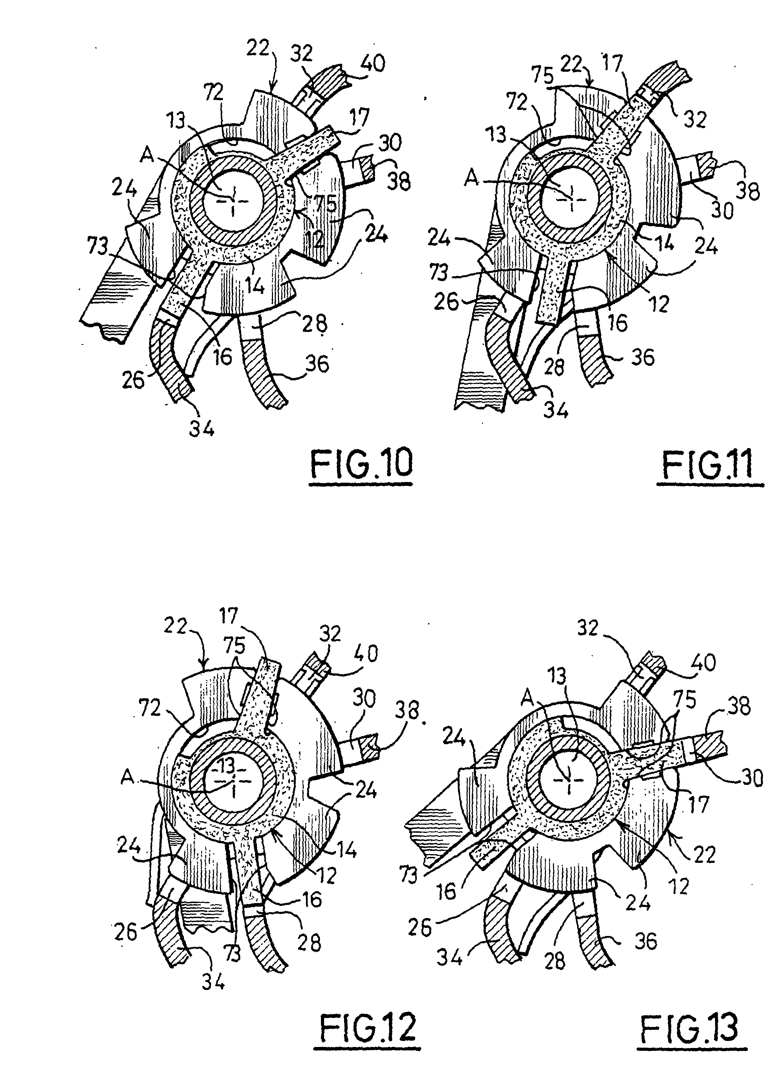

Sur les figures 10 à 13, on a représenté différentes positions de l'actionneur 12. De façon non limitative de l'invention, l'actionneur 12 peut être réalisé sous la forme de la tige 14 à partir de laquelle s'étendent les doigts 16 et 17, et qui coulisse sur une barre 13 de guidage, qui est coaxiale intérieurement à la tige 14, et qui est solidaire du carter de la boîte.

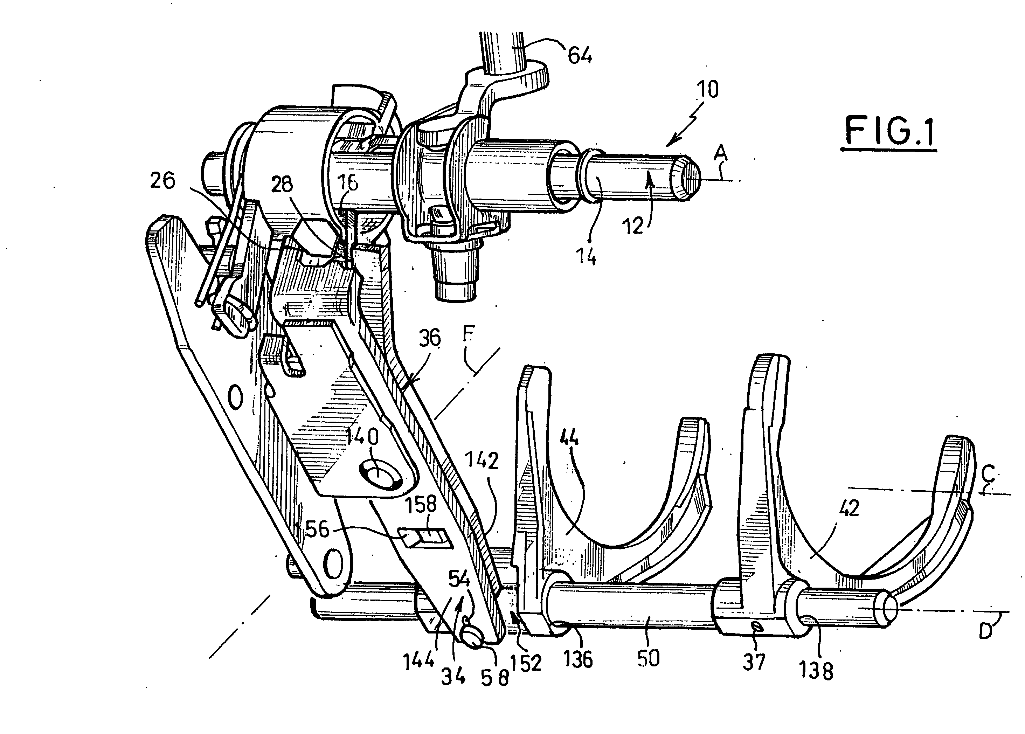

Par ailleurs, comme l'illustrent les figures 10 à 13 la tige axiale 14 de l'actionneur est solidaire, en rotation seulement, d'une douille 22 de verrouillage qui comporte des touches radiales 24 coplanaires aux doigts 16 et 17 dans le plan transversal perpendiculaire à l'axe A, c'est à dire dans le plan de la figure 1, et qui est immobile axialement. Pour obtenir l'immobilisation axiale de la douille 22, et de façon non limitative de l'invention, l'actionneur 12 peut être réalisé sous la forme de la tige 14 à partir de laquelle s'étendent les doigts 16 et 17, et qui coulisse sur une barre 13 de guidage, qui est coaxiale intérieurement à la tige 14, et qui est solidaire du carter de la boîte. La douille 22 est alors immobilisée axialement par rapport au carter de la boîte par exemple par une patte élastique 70 qui est solidaire de la barre 13. Cette patte élastique 70 est située en arrière du plan des figures 10 à 13 et est représentée aux figures 7 et 9.

La douille 22 comporte deux rainures 73 et 75 dans lesquelles peuvent respectivement coulisser axialement les doigts 16 et 17, et un alésage intérieur 72 qui reçoit la tige 14.

La rainure 75 est de la largeur du doigt 17, de sorte qu'un mouvement de rotation de la tige 14 entraîne en rotation la douille 22. En revanche, un mouvement de coulissement de la tige 14 n'entraîne pas la douille 22, qui demeure immobile axialement, les doigts 16 et 17 coulissant dans les rainures 73 et 75.

La douille de verrouillage 22 comporte autant de touches radiales 24 que les moyens de crabotage 10 comportent de pieds 34, 36, 38, et 40 de fourchettes, et ces touches radiales 24 sont agencées angulairement entre et de part et d'autre des doigts 16 et 17, de façon qu'elles soient reçues dans les fourches 26, 28, 30 ou 32 non sélectionnées par le doigt 16 ou 17 qui est reçu dans l'une de ces fourches.

De la sorte, comme on le verra ultérieurement, les touches radiales 24 verrouillent en translation les pieds 34, 36, 38, et 40 des fourchettes non sélectionnées et empêchent celles-ci de se déplacer axialement inopinément, ceci afin d'éviter que deux rapports de transmission ou plus ne soient engagés simultanément, ce qui entraînerait la destruction de la boîte de vitesses.

Comme l'illustrent les figures 10 à 13, les deux doigts radiaux 16 et 17, sensiblement coplanaires, sont répartis angulairement dans leur plan commun transversal de sélection de façon que, dans une position angulaire prédéfinie de sélection d'une fourchette 42, 44, 46 ou 48 déterminée, un seul doigt soit reçu dans une fourche de contact 26, 28, 30 ou 32 déterminée, l'autre doigt n'étant reçu dans aucune fourche de contact.

Ainsi, la figure 10 illustre une position angulaire de la tige 14 correspondant à la sélection des premier et deuxième rapports de marche avant. Le doigt 16 est reçu dans la fourche 26 tandis que le doigt 17 occupe une position angulaire intermédiaire entre les fourches 30 et 32, les fourches 28, 30 et 32 recevant des touches radiales 24 de la douille 22 de verrouillage pour bloquer les pieds correspondants 36, 38 et 40.

Cette sélection effectuée, un mouvement axial de la tige 14 permet de faire glisser axialement les doigts 16 et 17, dans les rainures 73 et 75, entre les touches 24 de la douille 22 et provoque ainsi l'engagement du premier ou du deuxième rapport de marche avant, les touches 24 de la douille 22 restant dans les fourches 28, 30 et 32 non sélectionnées et dans le plan commun transversal de sélection.

D'une manière analogue, en poursuivant la rotation de la tige 14, la figure 11 illustre une position angulaire de la tige 14 correspondant à la sélection des troisième et quatrième rapports de marche avant. Le doigt 17 est reçu dans la fourche 32 tandis que le doigt 16 occupe une position angulaire intermédiaire entre les fourches 26 et 28, les fourches 26, 28 et 30 recevant des touches radiales 24 de la douille 22 de verrouillage pour bloquer les pieds correspondants 34, 36, et 38.

Cette sélection effectuée, un mouvement axial de la tige 14 permet de provoquer l'engagement du troisième ou quatrième rapport de marche avant.

En poursuivant la rotation de la tige 14, la figure 12 illustre une position angulaire de la tige 14 correspondant à la sélection des cinquième et sixième rapports de marche avant. Le doigt 16 est reçu dans la fourche 28 tandis que le doigt 17 occupe une position angulaire intermédiaire entre les fourches 32 et 26, les fourches 26, 30, et 32 recevant les touches radiales 24 de la douille 22 de verrouillage pour bloquer les pieds correspondants 34, 38, et 40.

Cette sélection effectuée, un mouvement axial de la tige 14 permet de provoquer l'engagement du cinquième ou sixième rapport de marche avant.

Enfin, en fin de course de rotation de la tige 14, la figure 13 illustre une position angulaire de la tige 14 correspondant à la sélection du rapport de marche arrière. Le doigt 17 est reçu dans la fourche 30 tandis que le doigt 16 occupe une position angulaire intermédiaire entre les fourches 32 et 26, les fourches 26, 28, et 32 recevant les touches radiales 24 de la douille 22 de verrouillage pour bloquer les pieds correspondants 34, 36, et 40.

Cette sélection effectuée, un mouvement axial de la tige 14 permet de provoquer l'engagement du rapport de marche arrière.

On notera que la rotation dans un seul sens de la tige 14 permet d'effectuer la sélection des rapports de marche avant d'ordre croissant (respectivement décroissants). Cette configuration est particulièrement avantageuse, car elle permet dans le cas d'une boîte de vitesses robotisée fonctionnant selon un mode séquentiel, dans lequel la montée ou la descente des rapports s'établit consécutivement, de commander simplement la rotation de la tige 14 avec un vérin fonctionnant dans un seul sens pour la montée des rapports et dans le sens opposé pour la descente des rapports. De tels moyens de crabotage permettent de s'affranchir des considérations portant sur l'inertie des vérins que l'on rencontre avec des boîtes de vitesses robotisées conventionnelles, et permet de disposer d'une boîte de vitesses robotisée réagissant plus rapidement qu'une boîte de vitesses robotisée conventionnelle, ce qui la rend particulièrement apte à une conduite sportive.

On a représenté aux figures 1 à 3 des moyens de crabotage 10 pour l'actionnement de la fourchette 42 de commande des premier et deuxième rapports de marche avant et de la fourchette 44 de commande des cinquième et sixième rapports de marche avant qui sont associées toutes deux à l'arbre secondaire d'axe C de la boîte de vitesses selon l'invention.

Dans le mode de réalisation préféré de l'invention, et de façon non limitative de celle-ci, l'arbre primaire porte tous les pignons fixes de la boîte, et les arbres secondaires portent tous les pignons fous de la boîte, pour déterminer différents rapports de démultiplication.

La fourchette 44 de commande des cinquième et sixième rapports de marche avant, et la fourchette 42 de commande des premier et deuxième rapports de marche avant, associées à l'arbre secondaire d'axe C, sont destinées à commander le déplacement axial suivant l'axe C de deux crabots doubles associés (non représentés) destinés chacun à permettre l'engagement de deux rapports de démultiplication de marche avant.

De façon non limitative de l'invention, un premier crabot double, commandé par la fourchette 44 de commande des cinquième et sixième rapports de marche avant est notamment mobile axialement entre une position neutre et deux positions opposées de crabotage des pignons fous associés à dès cinquième et sixième rapports de marche avant, et un deuxième crabot double, commandé par la fourchette 42 de commande des premier et deuxième rapports de marche avant est notamment mobile axialement entre une position neutre et deux positions opposées de crabotage des pignons fous associés à des premier et deuxième rapports de marche avant.

Comme on l'a vu précédemment, l'actionneur 12 peut être relié par une tringlerie au levier de changement de vitesses du véhicule sur lequel agit le conducteur, ou, dans un mode de réalisation préféré de l'invention, être un vérin roto-linéaire mû par des moteurs pas à pas, commandés en réponse à des mouvements d'un levier de changement de vitesses du véhicule sur lequel agit le conducteur. Dans ce dernier cas, la boîte est une boîte de vitesses à commande automatisée, plus connue sous le vocable de "boîte robotisée".

Le doigt 16 de l'actionneur 12, qui s'étend radialement à partir de la tige axiale 14 de l'actionneur, est susceptible, au cours de son mouvement de rotation, de coopérer sélectivement avec des extrémités de contact de pieds 34 et 36 transversaux d'actionnement respectifs des fourchettes 42 et 44 pour effectuer la sélection des deux paires de rapports de transmission de la boîte associées chacune à une fourchette 42 ou 44.

A cet effet, chaque extrémité de contact des pieds 34 et 36 transversaux comporte une fourche de contact associée 26 et 28 qui est susceptible de recevoir le doigt radial 16 de l'actionneur 12. Dans le mode de réalisation préféré de l'invention, et comme il sera décrit plus en détail ultérieurement, chaque fourche de contact 26, 28 est constituée d'une lumière en forme de U qui est découpée dans une plaque qui forme le pied transversal d'actionnement 34, 36 associé de chaque fourchette.

Lorsque le doigt 16 est positionné dans la fourche de contact 26 ou 28 du pied transversal 34 ou 36 de la fourchette 42 ou 44 sélectionnée, l'actionneur 12 peut alors être déplacé en coulissement suivant son axe A dans un sens ou dans l'autre de manière à engager le rapport de transmission choisi par le conducteur du véhicule.

Comme on l'a vu précédemment, l'actionneur comporte des moyens de verrouillage de chaque pied transversal 42 ou 44 qui sont destinés, lorsque le doigt 16 de l'actionneur 12 est reçu dans une fourche de contact 26 ou 28 d'un pied 34 ou 36 associé, à verrouiller l'autre pied 36 ou 34, ceci afin d'éviter que deux rapports de transmission ne soient engagés simultanément, ce qui entraînerait l'endommagement, voire la destruction de la boîte de vitesses.

Ces moyens de verrouillage sont constitués de la touche radiale 24 précédemment décrite.

Comme l'illustrent les figures 1 et 3, la fourchette 44 de commande des cinquième et sixième rapports de marche avant et la fourchette 42 de commande des premier et deuxième rapports de marche avant sont montées sur un arbre 50 de guidage commun, d'axe D parallèle à l'axe C associé à l'arbre secondaire.

L'arbre 50 est monté coulissant dans des carters (non représentés) de la boîte, et il traverse des perçages 136 et 138 des fourchettes 44 et 42, comme représenté à la figure 1. La fourchette 44 est montée coulissante sur l'arbre 50 et la fourchette 42 est montée fixe sur l'arbre 50, par exemple par l'intermédiaire d'une goupille radiale 37 qui traverse radialement la fourchette 42 et l'axe 50.

De la sorte, les deux fourchettes 42 et 44 sont mobiles axialement, la fourchette 44 coulissant sur l'axe 50, et la fourchette 42 coulissant suivant l'axe D par rapport aux carters de la boîte lorsque l'arbre 50 est actionné en coulissement.

Le doigt radial 16 de l'actionneur 12 est contenu dans un plan transversal qui, en position de repos des deux fourchettes 42 et 44, coïncide avec le plan du crabot de la fourchette 44 de commande des cinquième et sixième rapports de marche avant. De ce fait, la fourchette 42 de commande des premier et deuxième rapports de marche avant est axialement plus éloignée du doigt de commande de l'actionneur que la fourchette 44 de commande des cinquième et sixième rapports de marche avant.

Si les fourchettes 42 et 44 comportaient des pieds transversaux 34 et 36 rigides, le doigt de commande 16 de l'actionneur devrait, pour passer d'une position de sélection de la fourchette 42 à une position de sélection de la fourchette 44, se déplacer d'au moins la distance axiale séparant la fourchette 44 de la fourchette 42.

Ceci serait particulièrement préjudiciable à une commande précise de boîte, car la tige 14 de l'actionneur 12, nécessairement longue, aurait alors une grande capacité de flexion. Une grande flexibilité de la tige 14 risquerait en effet d'amplifier les jeux de fonctionnement de l'actionneur 12 et serait par conséquent néfaste à la précision de passage des vitesses.

L'invention propose une conception permettant d'éviter que la tige 14 de l'actionneur 12 ne soit soumise à d'importants débattements axiaux et radiaux lors de l'actionnement en coulissement de la fourchette 42 de commande des premier et deuxième rapports de marche avant.

A cet effet, il est prévu, comme on l'a vu précédemment, des pieds d'actionnement 34 et 36 qui sont accolés l'un à l'autre et qui sont articulés en leur milieux, par un pivot 140 qui est porté par le carter de la boîte suivant un axe F transversal par rapport à la direction axiale C de l'arbre secondaire, chaque pied 34 ou 36 remplissant la fonction d'un levier basculant qui permet de renvoyer le mouvement de coulissement du doigt radial 16 de l'actionneur 12 parallèlement à l'axe C de l'actionneur 12.

Cette disposition n'est pas limitative de l'invention et les pieds d'actionnement 34 et 36 pourraient être articulés sur le pivot 140 ailleurs qu'en leur milieu, notamment dans leurs parties supérieures, ce qui aurait pour conséquence de provoquer une démultiplication du mouvement axial permettant notamment de réduire la course axiale de l'actionneur 12 nécessaire à l'engagement d'un rapport de démultiplication.

Comme l'illustrent plus particulièrement les figures 1 et 3, les premier 34 et deuxième 36 pieds d'actionnement respectifs de la fourchette 42 de commande des premier et deuxième rapport de marche avant et de la fourchette 44 de commande des cinquième et sixième rapport de marche avant présentent respectivement la forme d'une première plaque 36 et d'une deuxième plaque 34 qui sont accolées l'une à l'autre, et qui sont susceptibles de glisser l'une sur l'autre dans un plan qui est perpendiculaire à l'axe F de leur pivot 140 commun lorsqu'elles sont actionnées.

L'extrémité de la première plaque 36 comporte la première fourche de contact 28 en forme de lumière, et l'extrémité de contact de la deuxième plaque 34 comporte la deuxième fourche 26 de contact en forme de lumière.

Par ailleurs, des extrémités de commande 142 et 144 des plaques 36 et 34, qui sont situées à l'opposé des extrémités de contact 28 et 26 des plaques 36 et 34, de l'autre côté du pivot 140, comportent chacune une lumière 56, 54 qui est découpée suivant une forme de U inversé. Les lumières 56, 54 des extrémités de commande 142 et 144 reçoivent entre leurs branches des plots cylindriques 60 et 58 correspondants, chacun d'axe transversal parallèle à l'axe F, qui permettent d'entraîner la fourchette associée 44 ou 42.

Sur les figures 3 et 7, on a représenté une lumière 54 qui reçoit le plot cylindrique 58 d'entraînement de la fourchette 42 qui s'étend radialement à partir de l'arbre 50 de guidage des fourchettes pour lier et articuler la fourchette 42 de commande des premier et deuxième rapports de marche avant par rapport au pied 34.

D'une façon analogue, un plot d'entraînement 60, représenté aux figures 3 et 8, appartenant à la fourchette 44, s'étend directement à partir de la fourchette 44, pour lier et articuler la fourchette 44 de commande des cinquième et sixième rapports de marche avant par rapport au pied 36.

Comme représenté à la figure 3, la fourchette 44 de commande des cinquième et sixième rapports de marche avant peut avantageusement comporter un évidement 152 qui permet de mettre à nu une partie de l'arbre 50 et de permettre le passage du plot 58 qui articule la deuxième plaque 34 sur l'arbre de guidage 50 pour la commande de la fourchette 42 de commande des premier et deuxième rapports de marche avant.

En effet, l'évidement 152 débouche dans le perçage 136 de la fourchette 44, de manière qu'une partie de l'arbre 50 qui porte le plot 58 soit découverte. Ainsi, le plot 58 est mobile en coulissement entre des bords transversaux 154 de l'évidement 152 sur toute sa course axiale d'actionnement de la fourchette 42 de commande des premier et deuxième rapports de marche avant Ainsi, lors de l'engagement du premier ou du deuxième rapport de marche avant par le doigt 16 coopérant avec la fourche 26 du pied 34, le pied 34 pivote autour du pivot d'axe F et repousse dans la direction opposée le plot 58 solidaire de l'arbre 50 en actionnant ainsi la fourchette 42.

D'une façon analogue, lors de l'engagement du cinquième ou du sixième rapport de marche avant par le doigt 16 coopérant avec la fourche 28 du pied 36, le pied 36 pivote autour du pivot d'axe F et repousse dans la direction opposée le plot 60 solidaire de la fourchette 44.

Par ailleurs, les plaques 34 et 36 sont décalées transversalement suivant l'axe F, c'est à dire que la deuxième plaque 34 est transversalement plus éloignée des fourchettes 42, 44 que la première plaque 36. De plus, la deuxième plaque 34 est plus longue que la première plaque 36.

Cette disposition est avantageuse car elle permet, tout au long des courses axiales des fourchettes 42 et 44, aux extrémités 142 et 144 de commande des plaques de glisser l'une sur l'autre sans créer d'interférence entre les plaques 34 et 36. Ainsi, les extrémités 142 et 144 des plaques 34 et 36 ont pour trajectoire deux arcs de cercles concentriques qui sont décalés l'un par rapport à l'autre dans deux plans parallèles perpendiculaires à l'axe F.

Par ailleurs, le décalage des plaques 34 et 36 suivant l'axe F et leurs longueurs différentes permettent la sélection des plaques 34 et 36 grâce à un simple mouvement de rotation du doigt radial 16 de l'actionneur 12.

On remarquera à cet effet que, dans le mode de réalisation préféré de l'invention, la plaque 36 est agencée dans le prolongement d'un rayon de l'actionneur 12, et que la fourche de contact 32 de la plaque 34 est repliée en direction de l'actionneur 12 de façon à être agencée elle aussi dans le prolongement d'un rayon de l'actionneur 12, de façon à permettre une sélection aisée des plaques 34 et 36 par le doigt radial 16 de l'actionneur 12.

Enfin, la première plaque 36 et la deuxième plaque 34 comportent avantageusement des moyens d'indexation d'une plaque par rapport à l'autre, qui sont par exemple constitués d'une patte élastique 158 qui s'étend sur la face de la première plaque 36 qui est tournée vers la plaque 34, et qui est susceptible de coopérer avec une ouverture 156 de la deuxième plaque 34 lorsque l'une ou l'autre des plaques 34 ou 36 est actionnée en rotation pour déplacer axialement la fourchette 42 ou 44 associée.

De tels moyens de crabotage 10 permettent de se dispenser d'une pluralité de vérins d'actionnement du type de ceux l'on trouve dans des boîtes de vitesses robotisées conventionnelles, ce qui permet de disposer d'une boîte de vitesses robotisée à un seul actionneur 16 réagissant plus rapidement qu'une boîte de vitesses robotisée conventionnelle, ce qui la rend, là encore, particulièrement apte à une conduite sportive.

## Revendications

1. Boîte de vitesses pour véhicule automobile, du type qui comporte un arbre primaire et deux arbres secondaires parallèles, du type qui comporte au moins trois engrenages dans chacun desquels un pignon fixe de l'arbre primaire engrène avec un pignon fou porté par chacun des arbres secondaires, du type qui comporte des moyens (10) de crabotage de chaque pignon fou sur l'arbre secondaire associé qui comportent des crabots associés à chaque pignon fou qui sont mobiles axialement sous l'action de moyens de commande comportant une fourchette (42, 44, 46, 48) de commande de chaque crabot qui est montée coulissante parallèlement à l'arbre secondaire associé et qui est munie d'un pied transversal (34, 36, 38, 40) d'actionnement lié à la fourchette (42, 44, 46, 48) de commande et mû par un actionneur (12), commun aux moyens de crabotage des deux arbres, dont une tige (14), commandée en translation axiale en coulissement est susceptible de déplacer sélectivement le pied (34, 36, 38, 40) d'actionnement de chaque fourchette (42, 44, 46, 48) pour engager un rapport de démultiplication correspondant, et est montée tournante par rapport à son axe (A),
**caractérisée en ce que** la tige (14) de l'actionneur (12) porte deux doigts radiaux (16, 17) transversalement coplanaires qui sont susceptibles, lorsque la tige (14) est commandée en rotation, d'être reçus dans des fourches (26, 28, 30, 32) de contact dont chacune est portée par l'extrémité libre d'un pied transversal (34, 36, 38, 40) de fourchette (42, 44, 46, 48), pour sélectionner au moins deux rapports de démultiplication associés chacun à un arbre secondaire déterminé en amenant chacun des doigts radiaux (16, 17) dans une fourche (26, 28, 30, 32) de contact déterminée correspondante, puis permettre d'engager un rapport sélectionné par commande en translation axiale de la tige (14).

2. Boîte de vitesses selon la revendication 1, **caractérisée en ce qu'**elle comporte, sur un premier arbre secondaire, un crabot simple qui est agencé à proximité d'un pignon fou et qui est susceptible d'occuper sélectivement une position neutre ou une position de crabotage du dit pignon fou correspondant à l'engagement d'un rapport de démultiplication, et **en ce que** les autres crabots sont agencés entre deux pignons fous, pour occuper une position neutre ou deux positions opposées de crabotage de chacun des dits pignons fous, situées axialement de part et d'autre de la position neutre et correspondant chacune à l'engagement d'un rapport de démultiplication.

3. Boîte de vitesses selon la revendication 2, **caractérisée en ce que** la tige (14) de l'actionneur (12) peut occuper plusieurs positions angulaires prédéfinies de sélection, qui correspondent chacune à la sélection d'une fourche (26, 28, 30, 32) par un doigt (16, 17), et au moins une position axiale extrême de passage d'un des rapports de démultiplication et une position neutre.

4. Boîte de vitesses selon la revendication précédente, **caractérisée en ce que** les deux doigts (16, 17) radiaux coplanaires sont répartis angulairement dans leur plan commun de façon que, dans une position angulaire prédéfinie de sélection, un seul doigt (16, 17) soit reçu dans une fourche (26, 28, 30, 32) de contact déterminée, l'autre doigt (17, 16) n'étant reçu dans aucune fourche (26, 28, 30, 32) de contact.

5. Boîte de vitesses selon la revendication précédente, **caractérisée en ce que** la tige (14) de l'actionneur (12) porte une douille (22) de verrouillage d'au moins un rapport non sélectionné, qu'elle entraîne seulement en rotation, par rapport à laquelle les doigts radiaux (16, 17) peuvent coulisser librement, et **en ce que** la douille (22) comporte au moins une touche (24) radiale, qui est interposée angulairement entre les doigts (16, 17) dans le plan commun des doigts (16, 17) et qui est destinée, dans la position angulaire prédéfinie de sélection d'une fourche (26, 28, 30, 32) par le doigt (16, 17) correspondant, à être reçue dans au moins une fourche (26, 28, 30, 32) associée à la dite au moins une fourchette (42, 44, 46, 48) non sélectionnée pour la verrouiller axialement.

6. Boîte de vitesses selon l'une quelconque des revendications 3 à 5, **caractérisée en ce que**
- le premier arbre secondaire comporte un crabot double associé à des troisième et quatrième rapports de marche avant et un crabot simple associé à un rapport de marche arrière, et
- le deuxième arbre secondaire comporte un crabot double associé à des premier et deuxième rapports de marche avant et un crabot double associé à des cinquième et sixième rapports de marche avant.

7. Boîte de vitesses selon l'une quelconque des revendications précédentes, **caractérisée en ce que** les fourchettes (42, 44, 46, 48) associées aux arbres secondaires sont montées par paires sur un arbre commun (50, 52) longitudinal de guidage.

8. Boîte de vitesses selon la revendication 7 prise en combinaison avec la revendication 6, **caractérisée en ce que** la fourchette (46) de commande des troisième et quatrième rapports de marche avant et la fourchette de commande (48) du rapport de marche arrière sont montées coulissantes sur l'arbre (52) de guidage commun fixe associé au premier arbre secondaire.

9. Boîte de vitesses selon la revendication 8, **caractérisée en ce que** ce que les pieds d'actionnement (38, 40) de la fourchette (46) de commande des troisième et quatrième rapports de marche avant et de la fourchette (48) de commande du rapport de marche arrière sont liés rigidement aux fourchettes (46, 48) associées.

10. Boîte de vitesses selon la revendication 7 prise en combinaison avec la revendication 6, **caractérisée en ce que** la fourchette (42) de commande des premier et deuxième rapports de marche avant et la fourchette (44) de commande des cinquième et sixième rapports de marche avant sont montées respectivement fixe et coulissante sur l'arbre (50) de guidage commun coulissant associé au deuxième arbre secondaire.

11. Boîte de vitesses selon la revendication 10, **caractérisée en ce que** ce que les pieds (34, 36) d'actionnement de la fourchette (42) de commande des premier et deuxième rapports de marche avant et de la fourchette (44) de commande des cinquième et sixième rapports de marche avant sont articulés en leur milieu, par un pivot (140) d'axe transversal (F) qui est porté par un carter de la boîte transversalement par rapport à la direction axiale des arbres primaire et secondaire, sur un carter de la boîte.

12. Boîte de vitesses selon la revendication 10 ou 11, **caractérisée en ce que** la fourchette (42) de commande des premier et deuxième rapports de marche avant est plus éloignée axialement du doigt (16) de commande de l'actionneur (12) que la fourchette (44) de commande des cinquième et sixième rapports de marche avant.

13. Boîte de vitesses selon la revendication 11 ou 12, **caractérisée en ce qu'**un premier pied (36) transversal, associé à la fourchette (44) de commande des cinquième et sixième rapports de marche avant, et un deuxième pied (34) transversal, associé à la fourchette (42) de commande des premier et deuxième rapports de marche avant, présentent respectivement la forme d'une première (36) et d'une deuxième (34) plaques qui sont accolées l'une à l'autre dans un plan perpendiculaire à l'axe (F) de leur pivot (140) commun, une extrémité de commande (142, 144) de chaque plaque (36, 34) opposée à la fourche comportant une lumière découpée en forme de U inversé entre les branches de laquelle est reçu un plot (58, 60) cylindrique d'axe transversal d'entraînement de la fourchette (42, 44) associée, le plot (58) d'entraînement de la fourchette (42) de commande des premier et deuxième rapports de marche avant et le plot (60) d'entraînement de la fourchette (44) de commande des cinquième et sixième rapports de marche avant s'étendant respectivement à partir de l'arbre (50) de guidage commun et de la fourchette (44) de commande des cinquième et sixième rapports de marche avant, pour lier et articuler les fourchettes (42, 44) par rapport aux pieds (34, 36).

14. Boîte de vitesses selon la revendication 13, **caractérisée en ce que** la deuxième plaque (34) est transversalement plus éloignée des fourchettes (42, 44) que la première plaque (36) pour permettre la sélection des plaques (34, 36) par le doigt (16) radial de l'actionneur (12).

15. Boîte de vitesses selon la revendication 13 ou 14, **caractérisée en ce que** la deuxième plaque (34) est plus longue que la première plaque (36), pour permettre la sélection des plaques (34, 36) par le doigt (16) radial de l'actionneur (12).

16. Boîte de vitesses selon la revendication 13 à 15, **caractérisée en ce que** la fourche de contact (26, 28) de chaque plaque (34, 36) comporte une lumière qui est découpée en forme de U.

17. Boîte de vitesses selon les revendications 12 à 16 en combinaison avec la revendication 5, **caractérisée en ce que** chaque plaque (34, 36) est susceptible d'être verrouillée par la tranche radiale de la douille (22) de l'actionneur (12) lorsque le doigt (16) de l'actionneur (12) est reçu dans la fourche (28, 26) de contact de l'autre plaque (36, 34), et **en ce que** des moyens d'indexation (156, 158) sont interposés entre les première (36) et deuxième (34) plaques.

18. Boîte de vitesses selon l'une quelconque des revendications 14 à 17, **caractérisée en ce qu'**elle est à commande robotisée, et **en ce que** la tige (14) de l'actionneur (12) est solidaire d'un vérin roto-linéaire mû par des moteurs pas à pas, commandés en réponse à des mouvements d'un levier de changement de vitesses du véhicule sur lequel agit le conducteur.

19. Boîte de vitesses selon l'une quelconque des revendications 14 à 17, **caractérisée en ce qu'**elle est commandée manuellement et **en ce que** l'actionneur (12) est relié par une tringlerie à un levier de changement de vitesses du véhicule sur lequel agit le conducteur.

## Patentansprüche

1. Getriebe für ein Kraftfahrzeug, mit einer Antriebswelle, mit zwei parallelen Zwischenwellen, mit wenigstens drei Verzahnungen, deren jede ein Festrad auf der Antriebswelle aufweist, das mit einem Losrad auf einer der Zwischenwellen kämmt, mit einer Kupplungseinrichtung (10) für jedes Losrad auf der zugehörigen Zwischenwelle, die Klauen für jedes Losrad aufweist, welche in Axialrichtung beweglich sind unter der Einwirkung einer Steueranordnung, die eine Schaltgabel (42, 44, 46, 48) für die Steuerung einer jeden Klaue aufweist, welche parallel zur zugehörigen Zwischenwelle gleitend angeordnet ist und welche mit einem quer angeordneten Betätigungsteil (34, 36, 38, 40) versehen ist, das mit der Schaltgabel (42, 44, 46, 48) verbunden ist und von einem Aktuator (12) betätigt wird, der den Kupplungseinrichtungen der beiden Wellen gemeinsam ist, dessen Stange (14) eine gleitende Axialverschiebung ausführt zur wahlweisen Verschiebung der Betätigungsteile (34, 36, 38, 40) einer jeden Schaltgabel (42, 44, 46, 48) zum Einlegen des entsprechenden Ganges, wobei die Stange um ihre Achse A drehbar gelagert ist,
**dadurch gekennzeichnet, dass** die Stange (14) des Aktuators (12) zwei radiale, koplanar in Querrichtung angeordnete Schaltfinger (16, 17) aufweist, die, wenn die Stange (14) in Drehung versetzt wird, in einen Mitnehmer (26, 28, 30, 32) eingreifen, welcher am freien Ende des Betätigungsteils (34, 36, 38, 40) der Schaltgabel (42, 44, 46, 48) angeordnet ist um wenigstens zwei Gänge des Getriebes anwählen zu können, von denen je einer einer vorgegebenen Zwischenwelle zugeordnet ist durch Einführen eines der radialen Schaltfinger (16, 17) in einen entsprechenden vorgegebenen Mitnehmer (26, 28, 30, 32) und anschließendes Einlegen des ausgewählten Ganges durch eine Axialverschiebung der Stange (14).

2. Getriebe nach Anspruch 1, **dadurch gekennzeichnet, dass** es eine Einfachklaue auf einer ersten Zwischenwelle aufweist, die in der Nähe eines Losrades angeordnet ist und die wahlweise eine Neutralstellung oder eine Eingriffsstellung mit dem zugehörigen Losrad einnehmen kann zum Einlegen eines Ganges im Getriebe und dass die anderen Klauen zwischen zwei Losrädern angeordnet sind und eine Neutralstellung und zwei gegenüber liegende Eingriffsstellungen mit den Losrädern einnehmen können, die in Axialrichtung zu beiden Seiten der Neutralstellung vorgesehen sind und jeweils einem Einlegen eines Ganges im Getriebe entsprechen.

3. Getriebe nach Anspruch 2, **dadurch gekennzeichnet, dass** die Stange (14) des Aktuators (12) mehrere vorgegebene Winkelstellungen für die Anwahl einnehmen kann, deren jede der Anwahl eines Mitnehmers (26, 28, 30, 32) durch einen Finger (16, 17) entspricht, sowie mindestens eine axiale Endstellung für das Einlegen eines Ganges im Getriebe und eine Neutralstellung.

4. Getriebe nach dem vorhergehenden Anspruch, **dadurch gekennzeichnet, dass** die beiden koplanaren radialen Finger (16, 17) winkelmäßig in ihrer Ebene derart verteilt angeordnet sind, dass in einer vorgegebenen Winkelstellung der Anwahl nur ein Finger (16, 17) in einen vorgegebenen Mitnehmer (26, 28, 30, 32) eingreift, während der andere Finger (17, 16) in keinen der Mitnehmer (26, 28, 30, 32) eingreift.

5. Getriebe nach dem vorhergehenden Anspruch, **dadurch gekennzeichnet, dass** die Stange (14) des Aktuators (12) eine Verriegelungsbuchse (22) für wenigstens einen der nicht angewählten Gänge aufweist, die verdrehbar ist und relativ zu der die radialen Finger (16, 17) frei gleiten können und dass die Buchse (22) mindestens einen radialen Anschlag (24) aufweist, der winkelmäßig zwischen den Fingern (16, 17) in der gleichen Ebene wie die Finger (16, 17) angeordnet ist und der dazu dient, in der vorgegebenen Winkelstellung der Anwahl eines Mitnehmers (26, 28, 30, 32) durch den zugehörigen Finger (16, 17) in mindestens einen der einer nicht angewählten Schaltgabel (42, 44, 46, 48) zugehörigen Mitnehmer (26, 28, 30, 32) einzugreifen und diesen in Axialrichtung zu verriegeln.

6. Getriebe nach einem der Ansprüche 3 bis 5, **dadurch gekennzeichnet, dass**
die erste Zwischenwelle eine Doppelklaue aufweist, die dem dritten Gang und dem vierten Gang für die Vorwärtsfahrt zugeordnet ist und eine Einfachklaue aufweist, die dem Gang für die Rückwärtsfahrt zugeordnet ist und
die zweite Zwischenwelle eine Doppelklaue aufweist, die dem ersten Gang und dem zweiten Gang für die Vorwärtsfahrt zugeordnet ist und eine zweite Doppelklaue aufweist, die dem fünften Gang und dem sechsten Gang für die Vorwärtsfahrt zugeordnet ist.

7. Getriebe nach einem der vorhergehenden Ansprüche, **dadurch gekennzeichnet, dass** die den Zwischenwellen zugeordneten Schaltgabeln (42, 44, 46, 48) paarweise auf einer gemeinsamen sich in Längsrichtung erstreckenden Führungswelle (50, 52) angeordnet sind.

8. Getriebe nach Anspruch 7 zusammen mit Anspruch 6, **dadurch gekennzeichnet, dass** die Schaltgabel (46) für die Steuerung des dritten Ganges und des vierten Ganges für die Vorwärtsfahrt und die Schaltgabel (48) für die Steuerung des Ganges für die Rückwärtsfahrt gleitend auf der gemeinsamen feststehenden der ersten Zwischenwelle zugehörigen Führungswelle (52) angeordnet sind.

9. Getriebe nach Anspruch 8, **dadurch gekennzeichnet, dass** die Betätigungsteile (38, 40) der Schaltgabel (46) für die Steuerung des dritten Ganges und des vierten Ganges für die Vorwärtsfahrt und der Schaltgabel (48) für die Steuerung des Ganges für die Rückwärtsfahrt in steifer Weise mit den zugehörigen Schaltgabeln (46, 48) verbunden sind.

10. Getriebe nach Anspruch 7 zusammen mit Anspruch 6, **dadurch gekennzeichnet, dass** die Schaltgabel (42) für die Steuerung des ersten Ganges und des zweiten Ganges für die Vorwärtsfahrt und die Schaltgabel (44) für die Steuerung des fünften Ganges und des sechsten Ganges für die Vorwärtsfahrt auf der gemeinsamen der zweiten Zwischenwelle zugeordneten gleitenden Führungswelle (50) gleitend bzw. feststehend angeordnet sind.

11. Getriebe nach Anspruch 10, **dadurch gekennzeichnet, dass** die Betätigungsteile (34, 36) der Schaltgabel (42) für die Steuerung des ersten Ganges und des zweiten Ganges für die Vorwärtsfahrt und der Schaltgabel (44) für die Steuerung des fünften Ganges und des sechsten Ganges für die Vorwärtsfahrt in ihrer Mitte mittels eines Gelenks (140) mit einer Querachse F angelenkt sind, das vom Gehäuse des Getriebes getragen wird in Querrichtung bezüglich der Längsrichtung der Antriebswelle und der Zwischenwellen.

12. Getriebe nach Anspruch 10 oder 11, **dadurch gekennzeichnet, dass** die Schaltgabel (42) für die Steuerung des ersten Ganges und des zweiten Ganges für die Vorwärtsfahrt in Axialrichtung vom Schaltfinger (16) des Aktuators (12) weiter entfernt ist als die Schaltgabel (44) für die Steuerung des fünften Ganges und des sechsten Ganges für die Vorwärtsfahrt.

13. Getriebe nach Anspruch 11 oder 12, **dadurch gekennzeichnet, dass** ein erstes quer angeordnetes Betätigungsteil (36), das der Schaltgabel (44) für die Steuerung des fünften Ganges und des sechsten Ganges für die Vorwärtsfahrt zugeordnet ist, in Form einer ersten Platte (36) und einer zweiten Platte (34) ausgebildet ist, die miteinander verbunden sind in einer Ebene senkrecht zur Achse (F) ihres gemeinsamen Gelenks (140), wobei ein Steuerende (142, 144) einer jeden Platte (34, 36) gegenüber der Schaltgabel eine Aussparung in Form eines umgedrehten U aufweist, zwischen dessen Armen ein zylindrischer Stift (58, 60) mit einer Querachse zum Antrieb der zugehörigen Schaltgabel (42, 44) eingesetzt ist, wobei der Stift (58) zum Antrieb der Schaltgabel (42) für die Steuerung des ersten Ganges und des zweiten Ganges für die Vorwärtsfahrt und der Stift (60) zum Antrieb der Schaltgabel (44) für die Steuerung des fünften Ganges und des sechsten Ganges für die Vorwärtsfahrt ausgehend von der gemeinsamen Führungswelle (50) bzw. von der Schaltgabel (44) für die Steuerung des fünften Ganges und des sechsten Ganges für die Vorwärtsfahrt derart angeordnet sind, dass die Schaltgabeln (42, 44) mit den Teilen (34, 36) gelenkig verbunden sind.

14. Getriebe nach Anspruch 13, **dadurch gekennzeichnet, dass** die zweite Platte (34) in Querrichtung von den Schaltgabeln (42, 44) weiter entfernt ist als die erste Platte (36) um die Anwahl der Platten (34, 36) durch den radialen Finger (16) des Aktuators (12) zu ermöglichen.

15. Getriebe nach Anspruch 13 oder 14, **dadurch gekennzeichnet, dass** die zweite Platte (34) länger ist als die erste Platte (36) um die Anwahl der Platten (34, 36) durch den radialen Finger (16) des Aktuators (12) zu ermöglichen.

16. Getriebe nach Anspruch 13 oder 15, **dadurch gekennzeichnet, dass** der Mitnehmer (26, 28) einer jeden Platte (34, 36) eine Aussparung in der Form eines U aufweist.

17. Getriebe nach Ansprüchen 12 bis 16 zusammen mit Anspruch 5, **dadurch gekennzeichnet, dass** jede Platte (34, 36) durch den radialen Anschlag der Buchse (22) des Aktuators (12) verriegelbar ist, wenn der Finger (16) des Aktuators (12) in einen Mitnehmer (28, 26) der anderen Platte (36, 34) eingreift und dass eine Anzeigeanordnung (156, 158) zwischen der ersten Platte (36) und der zweiten Platte (34) angeordnet ist.

18. Getriebe nach einem der Ansprüche 14 bis 17, **dadurch gekennzeichnet, dass** es ein automatisiertes Getriebe ist und dass die Stange (14) des Aktuators (12) Teil eines Druckzylinders mit Linear-und Drehbewegung ist, der von Schrittmotoren angetrieben wird, die gesteuert werden durch die Bewegungen eines vom Fahrer betätigbaren Schalthebels im Fahrzeug.

19. Getriebe nach einem der Ansprüche 14 bis 17, **dadurch gekennzeichnet, dass** es manuell schaltbar und dass der Aktuator (12) über ein Gestänge mit dem vom Fahrer betätigbaren Schalthebel im Fahrzeug verbunden ist.

## Claims

1. A gear box for an automobile vehicle, of the type comprising a primary shaft and two parallel secondary shafts, of the type comprising at least three gears in each of which a fixed pinion of the primary shaft meshes with an idle pinion borne by each of the secondary shafts, of the type comprising means (10) for the claw coupling of each idle pinion on the associated secondary shaft which comprises claws associated with each idle pinion which can move axially under the action of control means comprising a control fork (42, 44, 46, 48) for each claw which is mounted to slide parallel to the associated secondary shaft and which is provided with a transverse actuation foot (34, 36, 38, 40) coupled to the control fork (42, 44, 46, 48) and moved by an actuator (12), common to the claw coupling means of the two shafts, of which a rod (14), controlled in axial sliding translation, may selectively displace the actuation foot (34, 36, 38, 40) of each fork (42, 44, 46, 48) in order to engage a corresponding gear ratio and is mounted to rotate with respect to its axis (A), **characterised in that** the rod (14) of the actuator (12) bears two radial fingers (16, 17) which are transversely coplanar and which may, when the rod (14) is caused to rotate, be received in contact forks (26, 28, 30, 32) each of which is borne by the free end of a transverse foot (34, 36, 38, 40) of a fork (42, 44, 46, 48), in order to select at least two gear ratios each associated with a predetermined secondary shaft by bringing each of the radial fingers (16, 17) into a corresponding predetermined contact fork (26, 28, 30, 32) and then to enable the engagement of a selected ratio by controlling the rod (14) in axial translation.

2. A gear box as claimed in claim 1, **characterised in that** it comprises, on a first secondary shaft, a single claw which is arranged in the vicinity of an idle pinion and which may selectively occupy a neutral position or a position for the claw coupling of the idle pinion corresponding to the engagement of a gear ratio, and **in that** the other claws are arranged between two idle pinions, in order to occupy a neutral position or two opposite claw coupling positions of each of the idle pinions disposed axially on either side of the neutral position and each corresponding to the engagement of a gear ratio.

3. A gear box as claimed in claim 2, **characterised in that** the rod (14) of the actuator (12) may occupy a plurality of predetermined angular selection positions, each corresponding to the selection of a fork (26, 28, 30, 32) by a finger (16, 17) and at least one axial end position of transition from one of the gear ratios and a neutral position.

4. A gear box as claimed in the preceding claim, **characterised in that** the two coplanar radial fingers (16, 17) are distributed angularly in their common plane such that, in a predetermined angular selection position, a single finger (16, 17) is received in a predetermined contact fork (26, 28, 30, 32), the other finger not being received in any contact fork (26, 28, 30, 32).

5. A gear box as claimed in the preceding claim, **characterised in that** the rod (14) of the actuator (12) bears a locking sleeve (22) for at least one unselected ratio, which it drives solely in rotation, with respect to which the radial fingers (16, 17) may freely slide, and **in that** the sleeve (22) comprises at least one radial pad (24) which is interposed angularly between the fingers (16, 17) in the common plane of the fingers (16, 17) and which is adapted, in the predetermined angular selection position of a fork (26, 28, 30, 32) by the corresponding finger (16, 17) to be received in at least one fork (26, 28, 30, 32) associated with at least the one unselected fork (42, 44, 46, 48) in order axially to lock it.

6. A gear box as claimed in any one of claims 3 to 5, **characterised in that**:
- the first secondary shaft comprises a double claw associated with third and fourth forward ratios and a single claw associated with a reverse ratio, and
- the second secondary shaft comprises a double claw associated with first and second forward ratios and a double claw associated with fifth and sixth forward ratios.

7. A gear box as claimed in any one of the preceding claims, **characterised in that** the forks (42, 44, 46, 48) associated with the secondary shafts are mounted in pairs on a common longitudinal guide shaft (50, 52).

8. A gear box as claimed in claim 7, in combination with claim 6, **characterised in that** the control fork (46) of the third and fourth forward ratios and the control fork (48) of the reverse ratio are mounted to slide on the common guide shaft (52) associated with the first secondary shaft.

9. A gear box as claimed in claim 8, **characterised in that** the actuation feet (38, 40) of the control fork (46) of the third and fourth forward ratios and the control fork (48) of the reverse ratio are coupled rigidly to the associated forks (46, 48).

10. A gear box as claimed in claim 7, in combination with claim 6, **characterised in that** the control fork (42) of the first and second forward ratios and the control fork (44) of the fifth and sixth forward ratios are mounted respectively in a fixed and sliding manner on the common sliding guide shaft (50) associated with the second secondary shaft.

11. A gear box as claimed in claim 10, **characterised in that** the actuation feet (34, 36) of the control fork (42) of the first and second forward ratios and the control fork (44) of the fifth and sixth forward ratios are articulated in their centre, by a pivot (140) of transverse axis (F) which is borne by a casing of the box transversely with respect to the axial direction of the primary and secondary shafts, on a casing of the box.

12. A gear box as claimed in claim 10 or 11, **characterised in that** the control fork (42) of the first and second forward ratios is axially remoter from the control finger (16) of the actuator (12) than the control fork (44) of the fifth and sixth forward ratios.

13. A gear box as claimed in claim 11 or 12, **characterised in that** a first transverse foot (36), associated with the control fork (44) of the fifth and sixth forward ratios, and a second transverse foot (34), associated with the control fork (42) of the first and second forward ratios, respectively have the shape of a first (36) and a second (34) plate which are adjacent to one another in a plane perpendicular to the axis (F) of their common pivot (140), a control end (142, 144) of each plate (36, 34) opposite the fork comprising a cut-out slot in the shape of an inverted U between the arms of which there is received a cylindrical pin (58, 60) of transverse axis driving the associated fork (42, 44), the drive pin of the control fork (42) of the first and second forward ratios and the drive pin (60) of the control fork (44) of the fifth and sixth forward ratios extending respectively from the common guide shaft (50) and the control fork (44) of the fifth and sixth forward ratios, in order to link and articulate the fork (42, 44) with respect to the feet (34, 36).

14. A gear box as claimed in claim 13, **characterised in that** the second plate (34) is transversely remoter from the forks (42, 44) than the first plate (36) in order to enable the selection of the plates (34, 36) by the radial finger (16) of the actuator (12).

15. A gear box as claimed in claim 13 or 14, **characterised in that** the second plate (34) is longer than the first plate (36) in order to enable the selection of the plates (34, 36) by the radial finger (16) of the actuator (12).

16. A gear box as claimed in claims 13 to 15, **characterised in that** the contact fork (26, 28) of each plate (34, 36) comprises a cut-out U-shaped slot.

17. A gear box as claimed in claims 12 to 16, in combination with claim 5, **characterised in that** each plate (34, 36) may be locked by the radial section of the sleeve (22) of the actuator (12) when the finger (16) of the actuator (12) is received in the contact fork (28, 26) of the other plate (36, 34) and **in that** indexing means (156, 158) are interposed between the first (36) and the second (34) plate.

18. A gear box as claimed in any one of claims 14 to 17, **characterised in that** it is robot controlled, and **in that** the rod (14) of the actuator (12) is rigid with a roto-linear jack moved by step-by-step motors controlled in response to movements of a gear change lever of the vehicle actuated by the driver.

19. A gear box as claimed in any one of claims 14 to 17, **characterised in that** it is controlled manually and **in that** the actuator (12) is connected by a rod assembly to a gear change lever of the vehicle actuated by the driver.
